# EUROPEAN PATENT APPLICATION

(11) **EP 4 606 864 A1**
(43) Date of publication of application: **27.08.2025**
(21) Application number: 23879817.7
(22) Date of filing: 18.10.2023
(51) Int. Cl.: C08L 95/00, C08K 5/42, C08L 67/00, E01C 7/26

(54) **ASPHALT MIXTURE**

(30) Priority: 18.10.2022 JP 2022167094
(71) Applicant: Kao Corporation, Chuo-ku, Tokyo 103-8210 (JP)
(72) Inventor: AKINO, Yusuke, Wakayama-shi, Wakayama 640-8580 (JP)
(74) Representative: Hoffmann Eitle
(86) International application number: PCT/JP2023/037647
(87) International publication number: WO 2024/085174

(57) **Abstract**

The present invention relates to an asphalt mixture containing a new asphalt, the following polymer metal salt (P), and an asphalt-regenerated aggregate. The polymer metal salt (P) is a metal salt of a polymer having a structural unit derived from an aromatic monomer and having an acidic group.

## Description

### Technical Field

The present invention relates to an asphalt mixture and a method for producing the same, and a road pavement method.

### Background Art

Asphalt pavement using an asphalt mixture has been performed for paving driveways, parking spaces, cargo yards, sidewalks, etc., because of relatively easy construction and a short period of time from beginning of paving works to traffic start. In this asphalt pavement, the paved roads have good hardness and durability since the road surface is formed from an asphalt mixture in which an aggregate is bonded with an asphalt.

In addition, in response to the recent trend of steep rise in the crude oil price and carbon neutral, it is desired to crush a waste material of asphalt pavement and use the crushed waste material as a part of a new aggregate to perform pavement construction.

For example, PTL 1 (JP 2020-37798 A) discloses a regenerated asphalt mixture obtained by mixing an asphalt-regenerated aggregate obtained through curing after addition of an additive for regeneration and/or a workability improver, a new aggregate, and a new asphalt. Then, as the additive for regeneration, a petroleum lubricating oil-based agent is exemplified, and as the workability improver, a fatty acid compound and a glycol ether compound are exemplified.

### Summary of Invention

The present invention relates to the following [1] to [3].
[1] An asphalt mixture containing a new asphalt, a polymer metal salt (P) as described below, and an asphalt-regenerated aggregate:
   polymer metal salt (P): a metal salt of a polymer that has a structural unit derived from an aromatic monomer and has an acidic group.
[2] A method for producing an asphalt mixture, the method including a step of mixing a new asphalt, a polymer metal salt (P) as described below, and an asphalt-regenerated aggregate under a heating condition:
   polymer metal salt (P): a metal salt of a polymer that has a structural unit derived from an aromatic monomer and has an acidic group.
[3] A road pavement method including a step of laying the asphalt mixture according to the above [1] on a road to form an asphalt pavement material layer.

### Description of Embodiments

Since an asphalt derived from an asphalt-regenerated aggregate is significantly degraded due to a long term thermal history and ultraviolet ray exposure, an asphalt composition in which an asphalt-regenerated aggregate is used has a problem of deteriorated properties in pavement due to the degraded asphalt.

In the technique disclosed in PTL 1, it is needed to previously cure the asphalt-regenerated aggregate after adding an additive for regeneration and/or a workability improver thereto.

The present invention relates to an asphalt mixture in which an asphalt-regenerated aggregate is used and which can provide asphalt pavement superior in pavement properties which are difficult to achieve together, such as durability and flexibility, a method for producing the same, and a road pavement method.

According to the present invention, it is possible to provide an asphalt mixture in which an asphalt-regenerated aggregate is used and which can provide asphalt pavement superior in pavement properties, such as durability and flexibility, a method for producing the same, and a road pavement method.

### [Asphalt Mixture]

The asphalt mixture of the present invention contains a new asphalt, a polymer metal salt (P) as described below, and an asphalt-regenerated aggregate:
polymer metal salt (P): a metal salt of a polymer that has a structural unit derived from an aromatic monomer and has an acidic group.

The asphalt mixture of the present invention may be one obtained by blending a new asphalt, a polymer metal salt (P), and an asphalt-regenerated aggregate.

The present inventors have found that an asphalt mixture that contains a new asphalt, a specific polymer metal salt, and an asphalt-regenerated aggregate can provide asphalt pavement superior in pavement properties, such as durability and flexibility, although the asphalt mixture contains an asphalt-regenerated aggregate.

Hereinafter, when the term "pavement properties" is simply mentioned herein, the term means pavement properties, such as durability and flexibility. The durability of asphalt pavement can be evaluated, for example, by a value of Marshall stability. The flexibility of asphalt pavement can be evaluated, for example, by a flow value in a Marshall stability test.

Asphalt pavement superior in the durability is superior, for example, in rutting resistance. Asphalt pavement superior in the flexibility is superior, for example, in crack resistance.

The detailed mechanism for achieving the effects of the present invention is not clear, but partially, is considered as follows.

The polymer metal salt of the present invention adsorbs asphaltene in the degraded asphalt derived from the asphalt-regenerated aggregate by an n-n interaction and by an affinity due to the structure to form a composite of asphaltene and the polymer. Then, in the composite of asphaltene and the polymer, ionized acid anion groups of the polymer are repulsive to one another, and thus, the dispersibility of the regenerated aggregate having a degraded asphalt attached thereto in asphalt is enhanced. Thus, it is presumably possible to provide asphalt pavement superior in properties, such as durability and flexibility. That is, it is presumed that the polymer metal salt does not lower the viscosity of the degraded asphalt but enhances the dispersibility of the regenerated aggregate having a degraded asphalt attached thereto in the new asphalt.

### <New Asphalt>

The new asphalt is also referred to as virgin asphalt or unused asphalt and means an asphalt that has never been used in asphalt pavement.

As the new asphalt, a variety of asphalts that have never been used in asphalt pavement can be used. Examples thereof include a straight asphalt, which is petroleum asphalt for pavement, and a modified asphalt. Examples of the modified asphalt include a blown asphalt and a polymer-modified asphalt which is modified with a polymer material, such as a thermoplastic elastomer or a thermoplastic resin. Straight asphalt is a residual bituminous substance obtained by subjecting crude oil to atmospheric distillation unit, vacuum distillation unit, etc. Blown asphalt means an asphalt obtained by heating a mixture of a straight asphalt and a heavy oil and then, blowing air to oxidize it. The asphalt is preferably selected from a straight asphalt and a polymer-modified asphalt, and a polymer-modified asphalt is more preferred from the viewpoint of durability of asphalt pavement, and a straight asphalt is more preferred from the viewpoint of versatility. As the polymer-modified asphalt, an asphalt modified with a thermoplastic elastomer is more preferred.

The modified asphalt is preferably a polymer-modified asphalt, and more preferably a polymer-modified asphalt modified with a thermoplastic elastomer.

### (Thermoplastic Elastomer)

Examples of the thermoplastic elastomer in the polymer-modified asphalt modified with a thermoplastic elastomer include at least one selected from a styrene/butadiene block copolymer, a styrene/butadiene/styrene block copolymer, a styrene/butadiene random copolymer, a styrene/isoprene block copolymer, a styrene/isoprene/styrene block copolymer, a styrene/isoprene random copolymer, an ethylene/vinyl acetate copolymer, an ethylene/acrylic acid ester copolymer, a styrene/ethylene/butylene/styrene copolymer, a styrene/ethylene/propylene/styrene copolymer, a polyurethane-based thermoplastic elastomer, a polyolefin-based thermoplastic elastomer, an isobutylene/isoprene copolymer, polyisoprene, polychloroprene, a synthetic rubber other than the above, and a natural rubber. The thermoplastic elastomer in the modified asphalt is preferably at least one selected from a styrene/butadiene block copolymer, a styrene/butadiene/styrene block copolymer, a styrene/butadiene random copolymer, a styrene/isoprene block copolymer, a styrene/isoprene/styrene block copolymer, a styrene/isoprene random copolymer, an ethylene/vinyl acetate copolymer, and an ethylene/acrylic acid ester copolymer.

Among them, the thermoplastic elastomer is, from the viewpoint of durability of asphalt pavement, preferably at least one selected from a styrene/butadiene block copolymer, a styrene/butadiene/styrene block copolymer, a styrene/butadiene random copolymer, a styrene/isoprene block copolymer, a styrene/isoprene/styrene block copolymer, a styrene/isoprene random copolymer, and an ethylene/acrylic acid ester copolymer, more preferably at least one selected from a styrene/butadiene block copolymer, a styrene/butadiene/styrene block copolymer, a styrene/butadiene random copolymer, a styrene/isoprene block copolymer, and a styrene/isoprene random copolymer, further preferably at least one selected from a styrene/butadiene random copolymer and a styrene/butadiene/styrene block copolymer.

The content of the thermoplastic elastomer in the polymer-modified asphalt is, from the viewpoint of durability and surface aesthetic appearance of asphalt pavement, preferably 0.1% by mass or more, more preferably 0.5% by mass or more, further preferably 1% by mass or more, and preferably 30% by mass or less, more preferably 20% by mass or less, further preferably 10% by mass or less.

### <Polymer Metal Salt (P)>

The asphalt composition of the present invention contains a polymer metal salt (P) as described below.

polymer metal salt (P): a metal salt of a polymer that has a structural unit derived from an aromatic monomer and has an acidic group.

The "polymer metal salt (P)" encompass an aspect in which the asphalt mixture contains a polymer-derived anion and a metal cation which are ionized.

The polymer moiety of the polymer metal salt (P) has a structural unit derived from an aromatic monomer and has an acidic group.

The aromatic monomer can have an aromatic skeleton in the main chain or a side chain, and from the viewpoint of affinity with asphaltene, preferably has an aromatic skeleton in the main chain.

Examples of the aromatic ring skeleton include, from the viewpoint of compatibility with asphaltene, a benzene skeleton, a naphthalene skeleton, an anthracene skeleton, a tetracene skeleton, a pentacene skeleton, a triphenylene skeleton, and a pyrene skeleton, and among them, from the viewpoints of availability and performance, the aromatic ring skeleton is preferably a naphthalene skeleton and a benzene skeleton, and more preferably a naphthalene skeleton.

The aromatic ring skeleton may have a substituent. Examples of the substituent include alkyl groups, such as a methyl group, an ethyl group, and a butyl group, and among them, from the viewpoint of securing the compatibility with asphaltene, the substituent is preferably a methyl group or an ethyl group. The number of the substituents is preferably 1 or more and 3 or less, and more preferably 1.

The acidic group of the polymer is present in a structural unit derived from an aromatic monomer in the polymer or other moieties. Preferably, a structural unit derived from an aromatic monomer has an acidic group.

Examples of the acidic group include a sulfonic acid group and a carboxylic acid group, and the acidic group is preferably a sulfonic acid group.

Examples of the polymer moiety of the polymer metal salt (P) include, particularly among chain polymerization methods, one obtained by a radical polymerization method and one obtained by an addition polymerization method, and particularly among sequential polymerization methods, one obtained by a condensation polymerization, and one obtained by a ring-opening polymerization method, one obtained by a living polymerization method, one obtained by an aromatic nucleophilic substitution reaction method (also referred to as aromatic electrophilic substitution reaction method), and other polyphenylene sulfides. Among them, the polymer moiety is preferably one obtained by an addition polymerization method or one obtained by a condensation polymerization method, and more preferably one obtained by a condensation polymerization method.

Examples of the polymer obtained by an addition polymerization method include polystyrenesulfonic acid which has a structural unit derived from styrenesulfonic acid.

An example of the polymer obtained by a condensation polymerization method is an aromatic sulfonic acid formalin condensate. The aromatic sulfonic acid formalin condensate is a condensate of an aromatic sulfonic acid and formaldehyde, and examples of the aromatic sulfonic acid include monocyclic aromatic sulfonic acids, such as cresolsulfonic acid and phenolsulfonic acid; α-naphthalenesulfonic acid, β-naphthalenesulfonic acid, α-naphtholsulfonic acid, β-naphtholsulfonic acid, alkylnaphthalenesulfonic acids, such as methylnaphthalenesulfonic acid and butylnaphthalenesulfonic acid, polycyclic aromatic sulfonic acid, such as creosote oil sulfonic acid; and ligninsulfonic acid. Among them, methylnaphthalenesulfonic acid formalin condensate, butylnaphthalenesulfonic acid formalin condensate, α-naphthalenesulfonic acid, and β-naphthalenesulfonic acid are preferred.

The polymer metal salt (P) is a basic salt of the polymer, and is preferably a sodium salt, a potassium salt, or a calcium salt, and more preferably a sodium salt.

The polymer metal salt (P) has a weight-average molecular weight of preferably 1,000 or more, more preferably 2,000 or more, further preferably 2,500 or more, and preferably 100,000 or less, more preferably 75,000 or less, further preferably 50,000 or less, furthermore preferably 20,000 or less.

Examples of the polymer metal salt (P) as a metal salt of a polymer having an aromatic skeleton in the main chain include methylnaphthalenesulfonic acid formalin condensate sodium salt, butylnaphthalenesulfonic acid formalin condensate sodium salt, and a metal salt of a formalin condensate of an aromatic sulfonic acid, such as α-naphthalenesulfonic acid or β naphthalenesulfonic acid; and an example thereof as a metal salt of a polymer having an aromatic skeleton in a side chain is a metal salt of polystyrenesulfonic acid, such as polystyrenesulfonic acid sodium salt.

Examples of a commercially available polymer metal salt (P) include "Demol MS", "Demol SN-B", "Demol N", and "Mighty 100" (all tradename) manufactured by Kao Corporation.

### [Asphalt-Regenerated Aggregate]

The asphalt mixture of the present invention contains an asphalt-regenerated aggregate as an aggregate.

The asphalt-regenerated aggregate is obtained by collecting, crushing, and classifying a used asphalt pavement body.

The used asphalt pavement body from which the asphalt-regenerated aggregate is derived contains an asphalt and an aggregate, and can contain other additives as required.

The asphalt contained in the asphalt-regenerated aggregate has physical and chemical properties deteriorated as compared with those of a new asphalt due to the influence of environmental factors, such as heat and light. The physical and chemical properties of an asphalt can be evaluated by measuring the penetration, the softening point, the bending strength, the strain at break, the asphalt composition, and the like of the asphalt. In general, an asphalt resulting from conversion of the maltene fraction in an asphalt to asphaltene and thus having a reduced penetration is often referred to as a degraded asphalt. However, even if the penetration of a regenerated asphalt is equal to the penetration of a new asphalt, the regenerated asphalt sometimes cannot exhibit a performance equal to that of a new asphalt due to other properties changed.

The asphalt mixture from which the used asphalt pavement body is derived contains an aggregate. Examples of such an aggregate include aggregates generally used in an asphalt mixture for road pavement, such as crushed stones, cobble stones, gravel, sand, and a ceramic. In addition, the asphalt mixture from which the used asphalt pavement body is derived may itself be one in which an asphalt-regenerated aggregate has been used as an aggregate.

### [New Aggregate]

The asphalt mixture of the present invention can contain a new aggregate in addition to the asphalt-regenerated aggregate.

As a specific aggregate of the new aggregate, any aggregate, such as crushed stones, cobble stones, gravel, sand, or a ceramic, can be selected and used. As the aggregate, a coarse aggregate having a particle diameter of 2.36 mm or more, a fine aggregate having a particle diameter of 0.075 mm or more and less than 2.36 mm, or a filler having a particle diameter of less than 0.075 mm can be used.

Examples of the coarse aggregate include crushed stones having a particle diameter range of 2.36 mm or more and less than 4.75 mm, crushed stones having a particle diameter range of 4.75 mm or more and less than 12.5 mm, crushed stones having a particle diameter range of 12.5 mm or more and less than 19 mm, and crushed stones having a particle diameter range of 19 mm or more and less than 31.5 mm.

Examples of the fine aggregate include river sand, dune sand, mountain sand, sea sand, crushed sand, fine sand, screenings, crushed stone dust, silica sand, artificial sand, glass cullet, and foundry sand.

The particle diameters of the coarse aggregate and fine aggregate are values based on a sieving test method defined in JIS A5001:2008.

Examples of the filler include sand, fly ash, a calcium carbonate powder, such as limestone powder, and hydrated lime. Among them, a calcium carbonate powder is preferred from the viewpoint of enhancing strength of asphalt pavement.

From the viewpoint of enhancing strength of asphalt pavement, the average particle diameter of the filler is preferably 0.001 mm or more, and preferably 0.05 mm or less, more preferably 0.03 mm or less, further preferably 0.02 mm or less.

Here, the average particle diameter means the average particle diameter at 50% cumulative volume (D₅₀), and can be measured by a laser diffraction particle size distribution analyzer.

As the aggregate, a coarse aggregate and a fine aggregate are preferably used in combination.

In this case, the mass ratio of the coarse aggregate to the fine aggregate (coarse aggregate/fine aggregate) is, from the viewpoint of durability of asphalt pavement, preferably 10/90 or more, more preferably 15/85 or more, further preferably 20/80 or more, and preferably 90/10 or less, more preferably 80/20 or less, further preferably 70/30 or less.

### <Polyester Resin>

The asphalt mixture of the present invention can further contain a polyester resin.

The polyester resin is a polycondensate of an alcohol component and a carboxylic acid component, containing a structural unit derived from an alcohol component and a structural unit derived from a carboxylic acid component.

Examples of the polyester resin include amorphous polyester resins and crystalline polyester resins, and amorphous polyester resins are preferred.

The alcohol component and the carboxylic acid component will be explained below.

### (Alcohol Component)

Examples of the alcohol component include an aliphatic diol, an alicyclic diol, an aromatic diol, and a trihydric or higher polyhydric alcohol. One of the alcohol components can be used alone or two or more thereof can be used in combination.

The aliphatic diol is preferably a linear or branched aliphatic diol with a main chain having 2 or more and 12 or less carbon atoms, more preferably a linear or branched aliphatic diol with a main chain having 2 or more and 8 or less carbon atoms.

The aliphatic diol is preferably a saturated aliphatic diol.

Specific examples of the aliphatic diol include ethylene glycol, 1,2-propanediol, 1,3-propanediol, 1,3-butanediol, 1,4-butanediol, 1,4-butenediol, 1,5-pentanediol, 1,6-hexanediol, neopentyl glycol, 1,10-decanediol, and 1,12-dodecanediol.

Examples of the alicyclic diol include hydrogenated bisphenol A (2,2-bis(4-hydroxycyclohexyl)propane), an alkylene oxide adduct of hydrogenated bisphenol A, cyclohexanediol, and cyclohexanedimethanol.

Examples of the aromatic diol include bisphenol A (2,2-bis(4-hydroxyphenyl)propane) and an alkylene oxide adduct of bisphenol A. An example of the alkylene oxide adduct of bisphenol A is an alkylene oxide adduct of bisphenol A represented by the following formula (I).

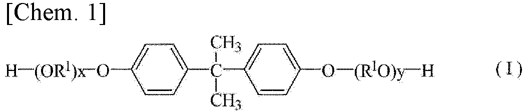

[In the formula, OR¹ and R¹O are an alkylene oxide, R¹ is an alkylene group having 2 or 3 carbon atoms, x and y represent a positive integer indicating the average number of moles of the alkylene oxide added, the sum of x and y is preferably 1 or more, more preferably 1.5 or more, and preferably 16 or less, more preferably 8 or less, further preferably 4 or less.]

Examples of the alkylene oxide adduct of bisphenol A represented by the formula (I) include a propylene oxide adduct of bisphenol A and an ethylene oxide adduct of bisphenol A. One of the alkylene oxide adducts of bisphenol A may be used alone or two or more thereof may be used in combination.

The trihydric or higher polyhydric alcohol is preferably a trihydric alcohol. Examples of the trihydric or higher polyhydric alcohol include glycerol, pentaerythritol, trimethylolpropane, and sorbitol.

From the viewpoint of controlling the properties, the alcohol component can further contain a monohydric aliphatic alcohol. Examples of the monohydric aliphatic alcohol include lauryl alcohol, myristyl alcohol, palmityl alcohol, and stearyl alcohol. One of the monohydric aliphatic alcohols can be used alone or two or more thereof can be used in combination.

### (Carboxylic Acid Component)

Examples of the carboxylic acid component include an aliphatic dicarboxylic acid, an aromatic dicarboxylic acid, and a trivalent or higher and hexavalent or lower polycarboxylic acid. One of the carboxylic acid components can be used alone or two or more thereof can be used in combination.

Examples of the aliphatic dicarboxylic acid include aliphatic dicarboxylic acids with a main chain having preferably 4 or more, and preferably 10 or less, more preferably 8 or less, more preferably 6 or less carbon atoms, such as fumaric acid, maleic acid, oxalic acid, malonic acid, citraconic acid, itaconic acid, glutaconic acid, succinic acid, adipic acid, suberic acid, azelaic acid, sebacic acid, dodecanedioic acid, a succinic acid substituted with an alkyl group having 1 or more and 20 or less carbon atoms or an alkenyl group having 2 or more and 20 or less carbon atoms, anhydrides thereof, and alkyl esters thereof (for example, the number of carbon atoms of the alkyl group is 1 or more and 3 or less). Examples of the substituted succinic acid include dodecylsuccinic acid, dodecenylsuccinic acid, and octenylsuccinic acid.

Examples of the aromatic dicarboxylic acid include phthalic acid, terephthalic acid, isophthalic acid, naphthalenedicarboxylic acid, anhydrides thereof, and alkyl esters thereof (for example, the number of carbon atoms of the alkyl group is 1 or more and 3 or less). Among the above aromatic dicarboxylic acids, from the viewpoints of aggregate scattering suppression and water resistance, isophthalic acid and terephthalic acid are preferred, and terephthalic acid is more preferred.

The trivalent or higher and hexavalent or lower polycarboxylic acid is preferably a trivalent carboxylic acid. Examples of the trivalent or higher and hexavalent or lower polycarboxylic acids include trimellitic acid, 2,5,7-naphthalenetricarboxylic acid, pyromellitic acid, and acid anhydrides thereof.

From the viewpoint of controlling the properties, the carboxylic acid component can further contain a monovalent aliphatic carboxylic acid. Examples of the monovalent aliphatic carboxylic acid include monovalent aliphatic carboxylic acids having 12 or more and 20 or less carbon atoms, such as lauric acid, myristic acid, palmitic acid, stearic acid, and alkyl (the number of carbon atoms is 1 or more and 3 or less) esters thereof. One of the monovalent aliphatic carboxylic acids can be used alone or two or more thereof can be used in combination.

### <Structural Units Derived from Polyethylene Terephthalate>

The polyester resin can contain an ethylene glycol-derived structural unit and a terephthalic acid-derived structural unit which are derived from polyethylene terephthalate. The polyethylene terephthalate may contain, in addition to the ethylene glycol-derived and terephthalic acid-derived structural units, a small amount of butanediol, isophthalic acid, or other components. The polyethylene terephthalate is preferably a collected polyethylene terephthalate.

When the polyester resin contains structural units formed from ethylene glycol and terephthalic acid which are derived from polyethylene terephthalate, the "structural unit derived from an alcohol component" contains an ethylene glycol-derived structural unit derived from polyethylene terephthalate, and the "structural unit derived from a carboxylic acid component" contains a terephthalic acid-derived structural unit derived from polyethylene terephthalate.

The polyester resin may be a polyester resin modified to the extent that the characteristics thereof are not substantially impaired. A specific example of the modified polyester resin is a polyester resin obtained by grafting or blocking a polyester resin with phenol, urethane, epoxy, or the like by a method described in JP 11-133668 A, JP 10-239903 A, JP 8-20636 A, or the like. A preferred example of the modified polyester resin is a urethanemodified polyester resin obtained by subjecting a polyester resin to urethane-extension with a polyisocyanate compound.

### <Content of Each Component>

The content of asphalt in the asphalt mixture is, from the viewpoint of both achieving durability and flexibility, preferably 1% by mass or more, more preferably 3% by mass or more, further preferably 4% by mass or more, and preferably 20% by mass or less, more preferably 15% by mass or less, further preferably 10% by mass or less.

In the present invention, the content of asphalt is the total content of the new asphalt and the asphalt in the asphalt-regenerated aggregate. In the present invention, the asphalt contained in the asphalt-regenerated aggregate is also referred to as a regenerated aggregate-derived asphalt so as to be distinguished from the new asphalt. The regenerated aggregate-derived asphalt is sometimes referred to as a degraded asphalt.

The content of the new asphalt in the asphalts is, from the viewpoint of both achieving durability and flexibility, preferably 50% by mass or more, more preferably 60% by mass or more, and preferably 80% by mass or less, more preferably 70% by mass or less. The content of the regenerated aggregate-derived asphalt in the asphalts is, from the viewpoint of both achieving durability and flexibility, preferably 20% by mass or more, more preferably 30% by mass or more, and preferably 50% by mass or less, more preferably 40% by mass or less.

The content of the regenerated aggregate-derived asphalt in the asphalt-regenerated aggregate can be measured by a solvent extraction method or an ignition loss method. In general, the asphalt content in an asphalt-regenerated aggregate derived from the used asphalt pavement is approximately 5.5% by mass.

In the present invention, the content of the regenerated aggregate-derived asphalt is measured according to a method defined in American Association of State Highway and Transportation Officials (AASHTO)) T 308-10 (2015) which is an ignition loss measurement. Since an asphalt-regenerated aggregate is contained as an aggregate, the amount of asphalt is determined based on the ignition loss of the asphalt-regenerated aggregate and is used in calculation for formulation.

The content of the polymer metal salt (P) in the asphalt mixture of the present invention is, from the viewpoint of enhancing durability of asphalt pavement, relative to 100 parts by mass of the total amount of the new asphalt and the regenerated aggregate-derived asphalt, preferably 1 part by mass or more, more preferably 1.5 parts by mass or more, further preferably 2 parts by mass or more, and from the viewpoint of maintaining workability, preferably 15 parts by mass or less, more preferably 10 parts by mass or less, further preferably 7 parts by mass or less.

The content of the polymer metal salt (P) in the asphalt mixture is, from the same point of view, relative to 100 parts by mass of the regenerated aggregate-derived asphalt, preferably 2 parts by mass or more, more preferably 3 parts by mass or more, further preferably 4 parts by mass or more, and from the viewpoint of maintaining workability, preferably 60 parts by mass or less, more preferably 40 parts by mass or less, further preferably 25 parts by mass or less, further preferably 12 parts by mass or less.

The content of the aggregate in the asphalt mixture is, from the viewpoint of both achieving durability and flexibility, preferably 50% by mass or more, more preferably 75% by mass or more, further preferably 80% by mass or more, and preferably 99% by mass or less, more preferably 98% by mass or less, further preferably 96% by mass or less.

The content of the asphalt-regenerated aggregate in the asphalt mixture is, from the viewpoint of reuse of a waste material of asphalt pavement, preferably 10% by mass or more, more preferably 15% by mass or more, further preferably 20% by mass or more, and from the viewpoint of both achieving durability and flexibility, preferably 50% by mass or less, more preferably 40% by mass or less, further preferably 35% by mass or less.

In the present invention, the content of aggregate is the total content of the asphalt-regenerated aggregate and a new aggregate which is optionally contained. The content of the regenerated aggregate-derived asphalt is included in the content of aggregate.

When the aggregate contains a new aggregate, the content of the new aggregate is, from the viewpoint of both achieving the use of the asphalt-regenerated aggregate and superior pavement properties, in 100 parts by mass of the total content of the asphalt-regenerated aggregate and the new aggregate, preferably 40 parts by mass or more, more preferably 50 parts by mass or more, and preferably 80 parts by mass or less, more preferably 75 parts by mass or less. The content of the asphalt-regenerated aggregate is, from the viewpoint of reuse of a waste material of asphalt pavement, in 100 parts by mass of the total content of the asphalt-regenerated aggregate and the new aggregate, preferably 15 parts by mass or more, more preferably 25 parts by mass or more, and from the viewpoint of both achieving the use of the asphalt-regenerated aggregate and superior pavement properties, preferably 60 parts by mass or less, more preferably 50 parts by mass or less.

Suitable examples of formulation of aggregates in the asphalt mixture include the following (1) to (3). (1) A fine-graded asphalt which contains 30% by volume or more and less than 45% by volume of a coarse aggregate, 30% by volume or more and 50% by volume or less of a fine aggregate, and 5% by volume or more and 10% by volume or less of an asphalt composition. (2) An example of the asphalt mixture is a dense-graded asphalt which contains, for example, 45% by volume or more and less than 70% by volume of a coarse aggregate, 20% by volume or more and 45% by volume or less of a fine aggregate, and 3% by volume or more and 10% by volume or less of an asphalt composition. (3) A porous asphalt which contains 70% by volume or more and 80% by volume or less of a coarse aggregate, 10% by volume or more and 20% by volume or less of a fine aggregate, and 3% by volume or more and 10% by volume or less of an asphalt composition.

In a conventional asphalt mixture containing an aggregate and an asphalt, a proportion of asphalt blended is generally adopted according to an optimum asphalt amount obtained from "Mix Design of Asphalt Composition" as described in "Guideline for Pavement Design and Construction" published by Japan Road Association.

In the present invention, the above optimum amount of asphalt corresponds to the total amount of the asphalt and the polymer metal salt (P). Note that the method of determining the amount is not to be limited to the method as described in "Guideline for Pavement Design and Construction", and the amount may also be determined by any other methods.

In general, an asphalt mixture containing an asphalt-regenerated aggregate can contain, for softening a regenerated aggregate-derived asphalt to enhance the flexibility, an oil, such as a petroleum lubricating oil-based additive for regeneration or an animal and vegetable oil-based or petroleum-based workability improver. Specific examples of the oil include additives, for example, a petroleum or mineral oil, or similar hydrocarbons, and an animal or vegetable oil, or similar oils and fats. On the other hand, the asphalt mixture of the present invention preferably contain no oil from the viewpoint of suppressing reduction in durability.

When the asphalt mixture of the present invention contains an oil, the content thereof is, from the viewpoint of suppressing durability, relative to 100 parts by mass of the regenerated aggregate-derived asphalt, preferably 50 parts by mass or less, more preferably 30 parts by mass or less, further preferably 10 parts by mass or less.

When an oil is contained, the content thereof is preferably lower than the content of the polymer metal salt (P).

### [Method for Producing Asphalt Mixture]

The method for producing an asphalt mixture of the present invention include a step of mixing a new asphalt, a polymer metal salt (P), and an asphalt-regenerated aggregate under a heating condition.

**In** the step of mixing, the new asphalt, the polymer metal salt (P), and the asphalt-regenerated aggregate can be mixed simultaneously or in any order. From the viewpoint of durability and flexibility of asphalt pavement, preferably, the polymer metal salt (P) is mixed with the asphalt-regenerated aggregate simultaneously or after with the new asphalt.

The mixing under a heating condition is preferably in an aspect in which a heated asphalt-regenerated aggregate is used.

When the asphalt mixture contains a new aggregate in addition to the asphalt-regenerated aggregate, the asphalt-regenerated aggregate and the new aggregate can be mixed so as to give, for example, the aforementioned contents, and used.

Specific examples of the method for producing an asphalt mixture include conventional methods of producing an asphalt mixture called a plant mix method, a premix method, and the like. The methods are all such a method that a new asphalt and the polymer metal salt (P) are added to a heated aggregate. Examples of the method of addition include a premix method in which the new asphalt and the polymer metal salt (P) are dissolved in advance, and a plant mix method in which the new asphalt is added to the heated aggregate , and then, the polymer metal salt (P) is put simultaneously or in any order. Among them, the plant mix method is preferred from the viewpoint of exhibiting asphalt performance.

More specifically, in the mixing step in the method for producing an asphalt mixture, preferably,
(i) the new asphalt is added to and mixed with the heated aggregate to prepare a mixture, and then, the polymer metal salt (P) is added thereto and mixed therewith,
(ii) the new asphalt and the polymer metal salt (P) are simultaneously added to and mixed with the heated aggregate, or
(iii) a mixture of the new asphalt and the polymer metal salt (P) which are heated and mixed together beforehand is added to and mixed with the heated aggregate.

Among them, the mixing step is preferably performed by a method (i).

Specifically, the step of mixing under a heating condition preferably includes a step of mixing the new asphalt and the asphalt-regenerated aggregate to prepare a mixture X, and a step of mixing the mixture X and the polymer metal salt (P).

The heating temperature is, from the viewpoint of enhancing durability by sufficient mixing, preferably 160°C or higher, more preferably 165°C or higher, further preferably 170°C or higher. From the viewpoint of performance stability, the heating temperature is preferably 350°C or lower, more preferably 250°C or lower, further preferably 200°C or lower.

The mixing time is, from the viewpoint of efficiently dispersing the polymer metal salt (P) uniformly in asphalt to develop asphalt performance, preferably 0.1 hours or more, more preferably 0.5 hours or more, further preferably 1.0 hours or more, further preferably 1.5 hours or more, and preferably 10 hours or less, more preferably 7 hours or less, further preferably 5 hours or less, further preferably 3 hours or less.

The method for preparing the mixture is not particularly limited, but preferably includes a step in which the new asphalt is heated and melted, the polymer metal salt (P) and as required, other additives are added, and the mixture is stirred and mixed with a commonly used mixer until the components are uniformly dispersed. Examples of the commonly used mixer include a homomixer, a dissolver, a paddle mixer, a ribbon mixer, a screw mixer, a planetary mixer, a vacuum reverse-flow mixer, a roll mill, and a twin screw extruder.

The asphalt mixture of the present invention may be used as a heated asphalt mixture which contains substantially no water. Alternatively, the asphalt mixture may be used as a cold asphalt mixture by blending an emulsifier or water into the asphalt mixture to form an asphalt emulsion and blending the aggregate and the like therewith. From the viewpoint of exhibiting asphalt performance, the mixture of the asphalt, the polyester resin, and the polymer metal salt (P) preferably contains substantially no water.

In a method for producing an asphalt mixture in which an asphalt-regenerated aggregate is used, for softening a regenerated aggregate-derived asphalt to enhance the flexibility, there is a known technique in which an oil, such as a petroleum lubricating oil-based additive for regeneration or an animal and vegetable oil-based or petroleum-based workability improver, is added, followed by curing. Specific examples of the oil include additives, for example, a petroleum or mineral oil, or similar hydrocarbons, and an animal or vegetable oil, or similar oils and fats. On the other hand, in the method for producing an asphalt mixture of the present invention, both of superior flexibility and durability can be achieved even if such a treatment is not applied.

Accordingly, in the method for producing an asphalt mixture of the present invention, it is preferred to add no oil before the step of mixing the new asphalt, the polymer metal salt (P), and the asphalt-regenerated aggregate under a heating condition. **In** other words, the asphalt-regenerated aggregate is preferably used without any treatment other than crushing and classification.

**In** addition, the step of mixing under a heating condition is a step of mixing only one or more selected from the group consisting of the new asphalt, the polymer metal salt (P), and the asphalt-regenerated aggregate, and optionally, a polymer, such as the polyester resin, and an additive other than the additive for regeneration and the workability improver.

The method for producing an asphalt mixture in the case of using the asphalt mixture as a heated asphalt mixture is not particularly limited, and the asphalt mixture may be produced by any method, but, in general, the method may be based on a method for producing an asphalt mixture that contains an aggregate and an asphalt composition.

### [Method for Laying Road Pavement]

The asphalt mixture of the present invention is suitable for paving a road. The method for laying road pavement of the present invention preferably includes a step of laying the asphalt mixture of the present invention on a road or the like to form an asphalt pavement material layer. The asphalt pavement material layer is usually a base course or a surface course of a road, and from the viewpoint of exhibiting the durability effect, is preferably a surface course of a road.

In the road pavement method, the asphalt mixture may be laid with compaction with the same laying machine equipment and by the same method as for a usual asphalt mixture. The compaction temperature of the asphalt mixture when used as a heated asphalt mixture is, from the viewpoint of exhibiting the asphalt performance, preferably 100°C or higher, more preferably 120°C or higher, further preferably 130°C or higher, and preferably 200°C or lower, more preferably 180°C or lower, further preferably 170°C or lower.

### Examples

Various properties were measured and evaluated by the following methods.

Note that, in the following Examples and Comparative Examples, part and % are based on mass unless otherwise indicated.

### Example 1

In an asphalt mixer, 15 kg of aggregates containing an asphalt-regenerated aggregate (see the following for the composition of the aggregates) heated to 180°C were put, and were mixed at 180°C for 60 seconds. Next, 520 g of a straight asphalt (manufactured by Mitsubishi Corporation Energy Co., Ltd.) was added and mixed with the asphalt mixer for 1 minute. Next, 24 g of a polymer metal salt P-1 (Demol MS (tradename), manufactured by Kao Corporation, methylnaphthalenesulfonic acid formalin condensate sodium salt) was added and the mixture was mixed with the asphalt mixer for 2 minutes, whereby an asphalt mixture was obtained.

### <Composition of Aggregates>

| | |
|---|---|
| Crushed stones No. 6 | 28.0 parts by mass |
| Crushed stones No. 7 | 9.0 parts by mass |
| Crushed sand | 7.0 parts by mass |
| River sand | 16.0 parts by mass |
| Mountain sand | 7.0 parts by mass |
| Stone dust (calcium carbonate) | 3.0 parts by mass |
| Asphalt-regenerated aggregate | 30.0 parts by mass |

Passing % by mass:
Sieve size 15 mm: 100% by mass
Sieve size 10 mm: 84.4% by mass
Sieve size 5 mm: 61.7% by mass
Sieve size 2.5 mm: 43.9% by mass
Sieve size 1.2 mm: 30.8% by mass
Sieve size 0.6 mm: 19.0% by mass
Sieve size 0.3 mm: 10.6% by mass
Sieve size 0.15 mm: 4.7% by mass

The content of the regenerated aggregate-derived asphalt in the asphalt-regenerated aggregate was 269 g. The total content of the new asphalt and the regenerated aggregate-derived asphalt was 789 g, and the asphalt content (the total content of the new asphalt and the regenerated aggregate-derived asphalt) in the asphalt mixture was 5% by mass. In Table 1, it was shown as "content (1)".

The content of the polymer metal salt P-1 was 9 parts by mass relative to 100 parts by mass of the regenerated aggregate-derived asphalt, and 3 parts by mass relative to 100 parts by mass of the total amount of the asphalts.

An estimated value of the asphalt content of the asphalt-regenerated aggregate was determined according to the method defined in AASHTO T 308-10 (2015). In Table 1, it was shown as "content (2)".

### [Evaluation]

### <Marshall Stability Test>

Of the obtained asphalt mixture, 1.2 kg was weighed, and was heat-cured at 180°C for 2 hours in storage . Then, using a Marshall test compactor "Asphalt Automatic Compactor" (manufactured by Nakajima Technology Inc.), 100 compactions in total were applied with 50 compactions for each face, whereby an asphalt specimen M-1 having a cylindrical shape was produced.

The asphalt specimen M-1 released from the mold was immersed in a thermostatic bath at 60°C for 30 minutes, and then, using a Marshall loading device (manufactured by Nakajima Technology Inc.), the asphalt specimen M-1 rolled sideways was crushed with a plate at a rate of 50 mm/minute. The maximum load until the specimen was broken was taken as the Marshall stability. The amount of displacement from the starting point to the maximum load in the slope of the displacement was measured and taken as the flow value. The other measurement conditions were according to the "B001 Marshall Stability Test" described in the "Handbook for assessment and testing method of pavement" published by the Japan Road Association.

The larger the value of the Marshall stability is, the better the durability of the asphalt pavement is. The flow value is used as an indicator of the flexibility of the asphalt pavement at the operating temperature.

The results are shown in Table 1.

Examples 2 to 9 and Comparative Examples 1 to 4

Asphalt specimens were produced in the same manner as in Example 1 except for changing the formulation of the asphalt mixture to those shown in Table 1, and were subjected to the Marshall stability test to measure the Marshall stability and flow value.

The other component shown in Table 1 was added at the appropriate time when the polymer metal salt P-1 was added in Example 1.

The results are shown in Table 1.

The polymer metal salts used in Examples 1 to 9 and the polymers used in Comparative examples 2 to 4 are shown below.

Polymer metal salt P-1: Demol MS (tradename), manufactured by Kao Corporation, methylnaphthalenesulfonic acid formalin condensate sodium salt

Polymer metal salt P-2: Demol SN-B (tradename), manufactured by Kao Corporation, buthylnaphthalene/naphthalenesulfonic acid formalin condensate sodium salt

Polymer metal salt P-3: Mighty 100 (tradename), manufactured by Kao Corporation, naphthalenesulfonic acid formalin condensate sodium salt, high molecular weight type

Polymer metal salt P-4: Demol N (tradename), manufactured by Kao Corporation, β-naphthalenesulfonic acid formalin condensate sodium salt

Polymer metal salt P-5: polystyrenesulfonic acid sodium salt, Reagent (manufactured by Alfa Aesar), weight-average molecular weight: 70,000

### Polymer p-1: non-neutralized naphthalenesulfonic acid formalin condensate

The polymer p-1 was obtained by the following production method.

To 1 mol of naphthalene, 1.28 mol of 98% sulfuric acid was added to perform a sulfonating reaction at a reaction temperature of 155°C to 160°C for 3 hours. Next, 0.97 mol of formaldehyde (35% formalin) was added thereto, and a condensation reaction was completed at a reaction temperature of 100°C over 12 hours, whereby a naphthalenesulfonic acid formalin condensate was obtained.

The polymer p-1 corresponds to a non-neutralized form of the polymer metal salt P-3.

### Polymer p-2: NEOPELEX GS (tradename), manufactured by Kao Corporation, alkylbenzenesulfonic acid

Polyester q-1: the polyester q-1 was produced by the following method.

To a 10-liter four-neck flask equipped with a thermometer, a stainless-steel stirrer bar, a dewatering conduit, a flow-down condenser, and a nitrogen introducing tube, 3943 g (molar ratio: 40) of polyoxypropylene (2.2 mol) adduct of bisphenol A, 1103 g (molar ratio: 83.6) of terephthalic acid, and 3244 g (molar ratio: 60 mol as ethylene glycol) of polyethylene terephthalate (PET, manufactured by Indorama Ventures) were put, and 45 g of tin(II) di(2-ethylhexanoate) was added under nitrogen atmosphere. The temperature was increased to 235°C over 3 hours in a mantle heater, and was kept at 235°C for 5 hours, followed by a reaction under a reduced pressure at 8.0 kPa for 1 hour. After visually confirming disappearance of PET granules from the reaction product, the reaction mixture was cooled to 180°C, and 710 g (molar ratio: 9.4) of an alkenylsuccinic acid anhydride was put therein. The temperature was increased to 210°C over 2 hours, then, was kept at 210°C for 1 hour, and a reaction was performed under a reduced pressure at 8.3 kPa and was continued until the softening point reached 105.2°C, whereby the polyester q-1 was obtained.

### [Table 1]

**Table 1**

| | | Salt | | | Other component | | | Pavement properties | |
|---|---|---|---|---|---|---|---|---|---|
| | | Type | Content (1) *1 | Content (2) *2 | Type | Content (1) *3 | Content (2) *4 | Marshal stability (kN) | Flow value (1/100cm) |
| Examples | 1 | P-1 | 3 | 9 | - | 0 | 0 | 28.7 | 32 |
| | 2 | | 1 | 3 | | | | 24.2 | 29 |
| | 3 | | 5 | 15 | | | | 26.3 | 34 |
| | 4 | | 15 | 44 | | | | 23.5 | 31 |
| | 5 | P-2 | 3 | 9 | | | | 26.3 | 31 |
| | 6 | P-3 | 3 | 9 | | | | 23.7 | 29 |
| | 7 | P-4 | 3 | 9 | | | | 22.9 | 28 |
| | 8 | P-5 | 3 | 9 | | | | 21.8 | 31 |
| | 9 | P-1 | 3 | 9 | q-1 | 10 | 29 | 39.7 | 30 |
| Comparative Example | 1 | - | 0 | 0 | - | 0 | 0 | 18.7 | 23 |
| | 2 | - | 0 | 0 | p-1 | 3 | 9 | 18.2 | 22 |
| | 3 | - | 0 | 0 | p-2 | 3 | 9 | 16.5 | 24 |
| | 4 | - | 0 | 0 | q-1 | 10 | 29 | 27.9 | 20 |

| | | | | | | | | | |
|---|---|---|---|---|---|---|---|---|---|
| *1: Content of salt relative to 100 parts by mass of asphalts (parts by mass) Asphalt content is total content of new asphalt and regenerated aggregate-derived asphalt *2: Content of salt relative to 100 parts by mass of regenerated aggregate-derived asphalt (parts by mass) *3: Content of other component relative to 100 parts by mass of asphalts (parts by mass) Asphalt content is total content of new asphalt and regenerated aggregate-derived asphalt *4: Content of other component relative to 100 parts by mass of regenerated aggregate-derived asphalt (parts by mass) | | | | | | | | | |

The results of Table 1 demonstrate that according to the present invention, an asphalt-regenerated aggregate is used, whereby an asphalt mixture capable of providing asphalt pavement superior in durability and flexibility can be obtained.

In addition, comparison of Example 9 and Comparative Example 3 demonstrates that also in the case where the polyester q-1 is further contained, an asphalt mixture capable of providing asphalt pavement superior in durability and flexibility can be obtained.

### Reference Examples 1 and 2

In Reference Example 1, an asphalt specimen was produced in the same manner as in Comparative Example 1, except that the aggregates containing the asphalt-regenerated aggregate were changed to aggregates containing no asphalt-regenerated aggregate (see the following for the composition of the aggregates), and was subjected to the Marshall stability test to measure the Marshall stability and flow value.

In Reference Example 2, an asphalt specimen was produced in the same manner as in Example 1, except that the aggregates containing the asphalt-regenerated aggregate were changed to aggregates containing no asphalt-regenerated aggregate, and was subjected to the Marshall stability test to measure the Marshall stability and flow value.

The results are shown in Table 2.

### <Aggregates Containing No Asphalt-Regenerated Aggregate>

### Composition of aggregates:

| | |
|---|---|
| Crushed stones No. 6 | 40.0 parts by mass |
| Crushed stones No. 7 | 13.0 parts by mass |
| Crushed sand | 10.0 parts by mass |
| River sand | 22.0 parts by mass |
| Mountain sand | 10.0 parts by mass |
| Stone dust (calcium carbonate) | 5.0 parts by mass |

Passing % by mass:
Sieve size 15 mm: 100% by mass
Sieve size 10 mm: 88.7% by mass
Sieve size 5 mm: 60.5% by mass
Sieve size 2.5 mm: 42.6% by mass
Sieve size 1.2 mm: 29.9% by mass
Sieve size 0.6 mm: 19.8% by mass
Sieve size 0.3 mm: 11.5% by mass
Sieve size 0.15 mm: 6.2% by mass

### [Table 2]

**Table 2**

| | | Salt | | | Pavement properties | |
|---|---|---|---|---|---|---|
| | | Type | Content (1) *1 | Content (2) *2 | Marshal stability (kN) | Flow value (1/100cm) |
| Reference Example | 1 | - | 0 | 0 | 15.8 | 25 |
| | 2 | P-1 | 3 | 9 | 15.5 | 27 |

| | | | | | | |
|---|---|---|---|---|---|---|
| *1: Content of salt relative to 100 parts by mass of asphalts (parts by mass) Asphalt content is total content of new asphalt and regenerated aggregate-derived asphalt *2: Content of salt relative to 100 parts by mass of regenerated aggregate-derived asphalt (parts by mass) | | | | | | |

The results shown in Table 2 demonstrate that in the case where the asphalt mixture contains no asphalt-regenerated aggregate, the incorporation of the polymer metal salt does not lead to a large difference in the durability and flexibility.

## Claims

1. An asphalt mixture comprising a new asphalt, a polymer metal salt (P) as described below, and an asphalt-regenerated aggregate:
polymer metal salt (P): a metal salt of a polymer having a structural unit derived from an aromatic monomer and having an acidic group.

2. The asphalt mixture according to claim 1, wherein the acidic group is a sulfonic acid group.

3. The asphalt mixture according to claim 1 or 2, wherein the aromatic monomer is an aromatic monomer having an aromatic ring skeleton in a main chain.

4. The asphalt mixture according to any one of claims 1 to 3, wherein the polymer is a polymer obtained by a condensation polymerization method.

5. The asphalt mixture according to any one of claims 1 to 4, wherein the aromatic monomer is an aromatic monomer having a naphthalene skeleton.

6. The asphalt mixture according to any one of claims 1 to 5, wherein the new asphalt is a straight asphalt or a modified asphalt.

7. The asphalt mixture according to any one of claims 1 to 6, wherein the asphalt mixture further comprises a polyester resin.

8. The asphalt mixture according to any one of claims 1 to 7, wherein the content of the polymer metal salt (P) is 1 part by mass or more and 15 parts by mass or less, relative to a total of 100 parts by mass of the new asphalt and the regenerated aggregate-derived asphalt.

9. The asphalt mixture according to any one of claims 1 to 8, wherein the content of the polymer metal salt (P) is 2 parts by mass or more and 60 parts by mass or less, relative to a total of 100 parts by mass of the regenerated aggregate-derived asphalt.

10. A method for producing an asphalt mixture, the method comprising a step of mixing a new asphalt, a polymer metal salt (P) as described below, and an asphalt-regenerated aggregate under a heating condition:
polymer metal salt (P): a metal salt of a polymer having a structural unit derived from an aromatic monomer and having an acidic group.

11. The method for producing an asphalt mixture according to claim 10, wherein no oil is added before the step of mixing the new asphalt, the polymer metal salt (P), and the asphalt-regenerated aggregate under a heating condition.

12. The method for producing an asphalt mixture according to claim 10 or 11, wherein the mixing is performed at a heating temperature of 160°C or higher and 350°C or lower.

13. The method for producing an asphalt mixture according to any one of claims 10 to 12, wherein the step of mixing under a heating condition comprises a step of mixing the new asphalt and the asphalt-regenerated aggregate to prepare a mixture X and a step of mixing the mixture X and the polymer metal salt (P).

14. The method for producing an asphalt mixture according to any one of claims 10 to 13, wherein the content of the polymer metal salt (P) in the asphalt mixture is 1 part by mass or more and 15 parts by mass or less, relative to a total of 100 parts by mass of the new asphalt and the regenerated aggregate-derived asphalt.

15. The method for producing an asphalt mixture according to any one of claims 10 to 14, wherein the content of the polymer metal salt (P) in the asphalt mixture is 2 parts by mass or more and 60 parts by mass or less, relative to a total of 100 parts by mass of the regenerated aggregate-derived asphalt.

16. A road pavement method comprising a step of laying the asphalt mixture according to any one of claims 1 to 9 on a road to form an asphalt pavement material layer.
